# EUROPEAN PATENT SPECIFICATION

(11) **EP 0 663 258 B1**
(45) Date of publication and mention of the grant of the patent: **24.09.1997**
(21) Application number: 95300163.3
(22) Date of filing: 11.01.1995
(51) Int. Cl.: B23H 7/10, B23H 7/20, G05B 19/406

(54) **Method of detecting abnormal condition of automatic wire connection in wire cut electric discharge machine**
Verfahren zum Erfassen von anormalen Betriebszuständen während des automatischen Drahtvorschubs auf eine Funkenerosionsmaschine
Méthode de détection d'une condition anormale pendant la connection automatique du fil sur une machine d'usinage par électroérosion

(30) Priority: 13.01.1994 JP 15789/94
(43) Date of publication of application: 19.07.1995
(73) Proprietor: FANUC LTD., Minamitsuru-gun, Yamanashi 401-05 (JP)
(72) Inventor: Uchiyama, Tatsuhiro, Room 11-506,, Minamitsuru-gun, Yamanashi, 401-05, (JP)
(74) Representative: Billington, Lawrence Emlyn

(56) References cited:
- EP-A- 0 062 078
- DE-A- 4 026 122

## Description

The present invention relates to the automatic wire connecting function of a wire cut electric discharge machine, and more particularly to a method of detecting an abnormal condition of automatic wire connection in the wire cut electric discharge machine.

A wire cut electric discharge machine is a machine which while allowing a wire electrode (hereinafter called a wire) to be travelled, gives a tension to the wire and allows a discharge to be generated between the wire and a workpiece to perform a desired machining on the workpiece. The wire is provided through a wire feed mechanism consisting of a brake roller, a feed roller and the like in a wire route from a wire feed reel through the workpiece to a wire recovery box, and given a tension between both the rollers by a braking force of the brake roller against a hauling force of the feed roller.

Such wire cut electric discharge machine has an automatic wire connecting function as a function for achieving an unmanned machining operation of the wire cut electric discharge machine. The automatic wire connecting function is a function which performs automatically and sequentially machining on a plurality of previously-set machining routes and before the machining on a route is completed to cause a workpiece to slippingly fall, interrupts the machining on the route, cuts and removes the wire, and then extends the wire through a start hole of the next machining route to start the machining of the next route, so that repeating the automatic wire connecting function for removing and extending the wire allows continuous and automatic machining on many machining routes.

Heretofore, where in such automatic wire connecting function, an abnormal condition occurs such as program failure of electric discharge machining itself or machining failure on the position and diameter of a machining start hole, or workpiece mounting failure or inclusion of foreign matter into the hole, wire connecting operation is not completed to allow the machining not to be started, so that where even repeating specified cycles of wire connecting operation causes wire connection not to be performed, processing is carried out in such a manner that a wire is moved to the next machining start hole to be automatically connected and to perform machining.

Where in the automatic wire connecting function, an abnormal condition occurs such as program failure of electric discharge machining itself, or machining failure of the position and diameter of a machining start hole, or workpiece mounting failure or inclusion of foreign matter into the holes, wire connecting operation is not completed to allow the machining not to be started, so that where even repeating specified cycles of wire connecting operation causes wire connection not to be performed, processing is carried out in such a manner that a wire is moved to the next machining start hole to be automatically connected and to perform machining. Accordingly, a previously set machining is not completed, thereby reducing the yield of workpieces obtained by a wire cut electric discharge machine.

Thus, in order to previously detect an abnormal condition relating to the machining start hole such as program failure of the electric discharge machining itself or machining failure of the position and diameter of the machining start hole, or workpiece mounting failure or inclusion of foreign substance into the hole, it is necessary to perform workpiece movement to the machining start hole, and wire connecting and cutting operation only without performing actual machining. Where movement to the machining start hole, and wire connecting and cutting operation only are performed, a problem exists in that a program which corrects a normal machining program and performs movement to the machining start hole, and wire connecting and cutting operation only must be prepared again.

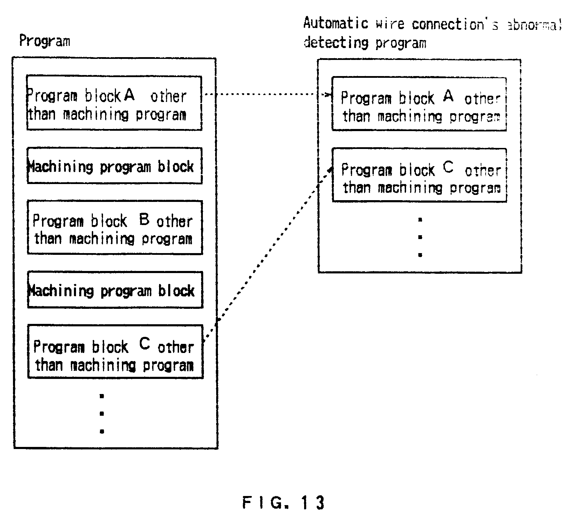

Fig. 13 is a diagram to help explain the procedure of preparing a program for detecting an abnormal condition of automatic wire connection from a machining program. Generally, a program for a wire cut electric discharge machine has machining program blocks and blocks other than the machining program blocks such as automatic wire connecting function, so that in order to prepare a program performing movement to the machining start hole, and wire connecting and cutting operation only, it is necessary to correct the program for a wire cut electric discharge machine and prepare newly an additional program for detecting an abnormal condition of automatic wire connection. The procedure of preparing the additional program for detecting an abnormal condition of automatic wire connection is such that, for example, in Fig. 13, assuming that a program for a wire cut electric discharge machine consists of machining program blocks and blocks A, B, C, ... other than the machining program blocks, and of the blocks A, B, C, ... other than the machining program blocks, the blocks A, C, ... are those for a program relating to automatic wire connecting function, the machining program blocks and the block B not relating to automatic wire connecting function are excluded from the program to prepare newly the additional program consisting of blocks A, C, ...

Thus, the present invention may be applied to solve problems with the above-mentioned method of detecting an abnormal condition of automatic wire connection in the conventional wire cut electric discharge machine, and the invention may provide a method of e.g. detecting an abnormal condition relating to machining start holes by performing movement to the machining start hole, and wire connecting and cutting operation only, without performing correction of the program for the wire cut electric discharge machine.

The present invention may achieve the above-mentioned aims, in a method of performing wire cut electric discharge machining by a program-controlled wire cut electric discharge machine, comprising a preliminary step of detecting an abnormal condition of automatic wire connection in the wire cut electric discharge machine by means of selecting and executing, by operation of the wire cut electric discharge machine, only those control program contents of a workpiece machining control program for the wire cut electric discharge machine, which are program blocks other than machining program blocks and which are related to an automatic wire connecting function, the execution of the selected program contents by the wire cut electric discharge machine being monitored by an abnormal condition detecting means, thereby to provide a preliminary detection of an abnormal condition associated with at least one machining start hole, before wire cut electric discharge machining is actually performed.

The present invention may achieve the above-mentioned aims, in a method of detecting an abnormal condition of automatic wire connection in a wire cut electric discharge machine, by selecting only program blocks which are other than machining program blocks and related to automatic wire connecting function, among those for machining a workpiece by the wire cut electric discharge machine, and executing the selected program blocks, and then detecting previously an abnormal condition of the machining start hole before performing actual machining.

An abnormal condition of the machining start hole in the present invention causes a condition in which automatic wire connection becomes difficult, which abnormal condition may include, for example, program failure of electric discharge machining itself, machining failure of the position and diameter of the machining start hole, or workpiece mounting failure or inclusion of foreign matter into the hole.

The program used to detect an abnormal condition of automatic wire connection in a wire cut electric discharge machine according to the present invention, may be the same as that used for actual machining by the wire cut electric discharge machine, in which program a series of operations including movement to the machining start hole, and wire connecting and cutting operation are performed for each machining start hole, thereby allowing the automatic wire connection for all machining start holes on a workpiece. Also, the results of the detection for an abnormal condition of machining start holes can be displayed together with the data on machining start hole position.

Therefore, this invention may have results as follows.

According to the present invention, in detecting an abnormal condition of automatic wire connection, by skipping the machining program blocks out of the program used to detect an abnormal condition of automatic wire connection in a wire cut electric discharge machine, and by skipping program blocks not relating to automatic wire connection out of those other than the machining program blocks, only program blocks relating to automatic wire connection are selected to execute.

Then, after the program blocks have been finished, all or part of the results of the detection for an abnormal condition of machining start holes may be displayed together with the data on machining start hole position.

As described previously, according to the present invention, movement to machining start holes, and wire connecting and cutting operation only are performed without performing correction of the program for the wire cut electric discharge machine, thereby allowing an abnormal condition relating to machining start holes to be detected.

And also, according to the embodiments of the present invention, an abnormal condition of automatic wire connection can be displayed on a screen together with the coordinate with respect to an arbitrary reference on a workpiece.

To provide a better demonstration of the characteristics, hereafter, as examples without any restrictive character, some preferred embodiments are described referring to accompanying drawing, wherein;
Fig. 1 is a flowchart to help explain the operation of one embodiment of the present invention.
Fig. 2 is a subflowchart to help explain the operation of one embodiment of the present invention.
Fig. 3 is a block diagram of a wire cut electric discharge machine for performing one embodiment of the present invention.
Fig. 4 is a schematic program diagram.
Fig. 5 is a program block diagram.
Fig. 6 is a diagram to help explain one example of the code for a machining hole movement command.
Fig. 7 is a schematic block diagram of a memory storing the results of an abnormal condition of automatic wire connection.
Fig. 8 is a diagram to help explain machining start holes in a workpiece.
Fig. 9 is a first display screen example of automatic wire connection results by a method of detecting an abnormal condition of automatic wire connection according to the present invention.
Fig. 10 is a second display screen example of automatic wire connection results by a method of detecting an abnormal condition of automatic wire connection according to the present invention.
Fig. 11 is a third display screen example of automatic wire connection results by a method of detecting an abnormal condition of automatic wire connection according to the present invention.
Fig. 12 is a fourth display screen example of automatic wire connection results by a method of detecting an abnormal condition of automatic wire connection according to the present invention.
Fig. 13 is a diagram to help explain a procedure of preparing a program for detecting an abnormal condition of automatic wire connection from machining programs.

Although with reference to drawings, embodiments of the present invention will be explained in detail hereinafter, the present invention is not limited to the embodiments.

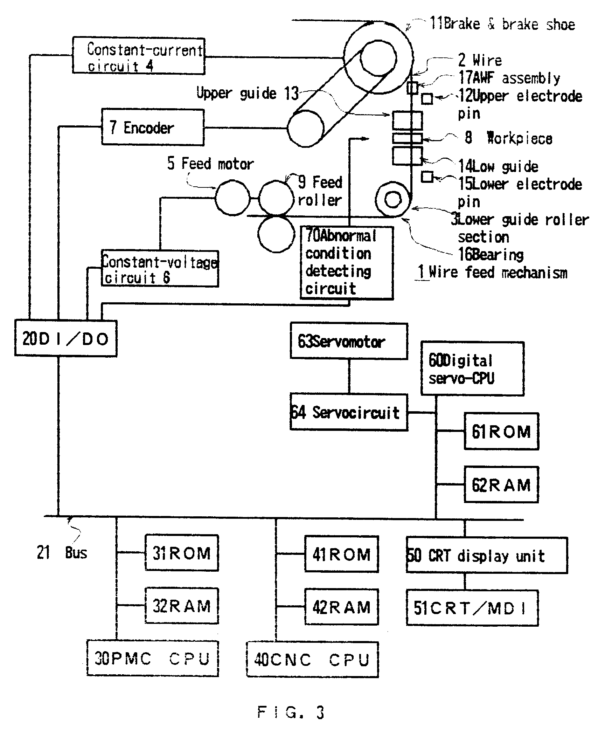

First, using Fig. 3, the block diagram of a wire cut electric discharge machine to perform one embodiment of the present invention will be explained.

In Fig. 3, a wire 2 is stretched between upper and lower machine frames (not shown) arranged opposite in a wire cut electric discharge machine assembly. The wire 2 has a route leading from the wire supplying bobbin of a wire winding unit (not shown) through a brake and brake shoe 11, an upper electrode pin 12, an upper guide assembly 13, a workpiece 8, a lower guide assembly 14, a lower electrode pin 15, a lower guide roller section 3 and a feed roller 9, as shown Fig. 3, to a wire pull-in unit (not shown), and is supplied from the wire winding unit, supplied by a wire feeding roller mechanism, passes through a wire feed mechanism 1, and then wound up by the wire pull-in unit.

The roller mechanism consists of a brake roller and a brake pinch roller of the brake section, the brake roller being braked by the brake driven by a constant-current circuit 4, and the contact of the brake shoe 11 of the brake roller with the wire 2 causes the feed control of the wire 2 to be performed. The brake can employ, for example, a powder brake such that a powder clutch is connected to the brake roller to control the free rotation of the brake roller. The powder clutch, which employs usually an electromagnetic type one, is used to adjust the degree of coupling of the prime mover side with the driven side according to the magnitude in supplied current, so that fixing the prime mover side to the electric discharge machine assembly side allows the brake action to be exhibited. The brake roller is mounted with an encoder 7 to detect the rotated travel of the brake roller and the brake shoe 11.

Provided in the wire pull-in unit is the feed roller 9 driven by a feed motor 5 supplied with a voltage from a constant-voltage circuit 6 to perform wind-up by the travel of the wire 2 at a set speed.

With the above-mentioned configuration of the wire feed mechanism, the wire winding unit and the wire pull-in unit form a wire extending or stretching means, and a voltage is applied between the wire 2 and the workpiece 8 to cause a discharge to be generated between the wire 2 and the workpiece 8, whereby the workpiece 8 is machined to a desired shape.

The lower guide assembly 14 has a function for receiving a wire fed by a lower pipe jet and feeding it to the feed roller side. Mounted to the upper portion of the upper guide assembly is an AWF assembly 17 for performing wire cutting, thereby cutting a wire by an associated cutter to process. These upper guide assembly 13, lower guide assembly 14, AWF assembly 17 and wire feed mechanism form an automatic wire connection mechanism.

Provided to each section of the automatic wire connection mechanism is a means (not shown) for detecting an abnormal condition to detect an abnormal condition, for example, a clogging of machining start holes. The means for detecting an abnormal condition is connected to an abnormal condition detecting circuit 70.

The above-mentioned constant-current circuit 4, constant-voltage circuit 6, encoder 7 and abnormal condition detecting circuit 70 are connected through an input/output circuit (hereinafter called the DI/DO) 20 to a bus 21, so that through the DI/DO 20, the sending of a control signal from a CPU to the constant-current circuit 4 and the constant-voltage circuit 6, the sending of a measuring signal from the encoder 7 to the CPU, and the sending of an abnormal condition detecting signal from the abnormal condition detecting circuit 70 to the CPU are performed.

Connected to the bus 21 are, in addition to the DI/DO 20, a CPU 30 for a programmable controller (hereinafter called the PMC), a CPU 40 for a numerical control unit (hereinafter called the CNC), and a CRT display unit 50. The CPU 30 for the PMC and the CPU 40 for the CNC are connected with ROMs 31, 41 and with RAMs 32, 42, respectively, and the CRT display unit 50 with an input/output unit of the CRT (hereinafter called the CRT/MDI) 51. The CRT display unit 50 is a display unit for displaying the monitor information of the wire feed mechanism or other information in various forms and displaying an abnormal condition of automatic wire connection and the like on the CRT screen according to display programs stored in the ROM 31.

The ROM 31 is used as a program memory, and stores a program for displaying an abnormal condition of automatic wire connection, and various programs for controlling respective sections of a wire cut electric discharge machine and the wire cut electric discharge machine itself.

The RAM 32 is used as a data memory, stores the results of automatic wire connection as well as position data associated with machining programs and various setting data for specifying other machining conditions, and is utilized as a memory for temporarily storing the data for various calculations performed by the CPU 30. It also has a register region for calculating the output pulse of the encoder 7.

The ROM 41 is used as a program memory of the CNC for performing work table position control, while the RAM 42 is used as a data memory, and is utilized as a memory for storing position data and the like associated with machining programs, or for temporarily storing the data for various calculations performed by the CPU 40.

Although Fig. 3 shows the CRT display unit 50 as a display unit, a display means is not limited to the CRT, so other display units such as a liquid crystal display unit may be used.

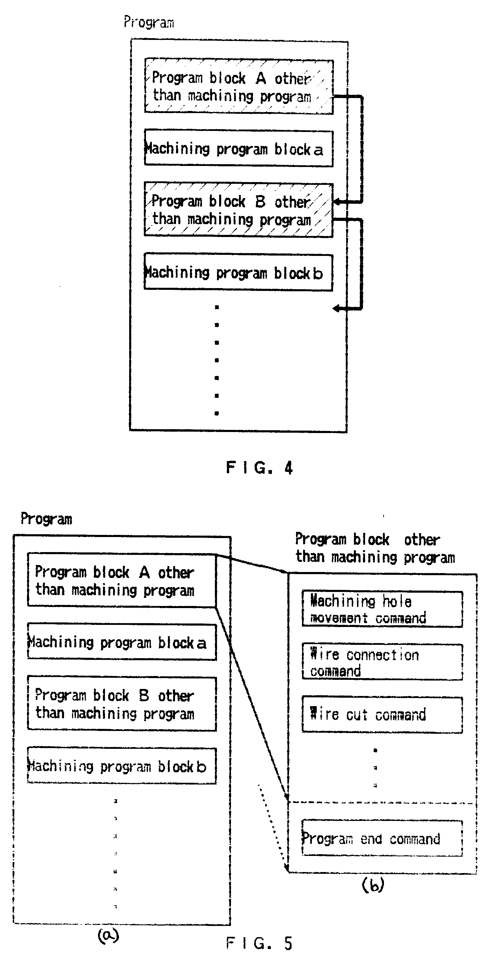

In the wire cut electric discharge machine having the above-mentioned configuration, electric discharge machining is performed by a program as shown in the schematic program diagram of Fig. 4. The program shown in Fig. 4 consists of machining program blocks a, b, ... and program blocks A, B, ... other than the machining program blocks.

In the method of detecting an abnormal condition of automatic wire connection in a wire cut electric discharge machine according to the present invention, by skipping the machining program blocks for performing machining and program blocks not relating to automatic wire connection out of the program, only program blocks relating to automatic wire connection (blocks hatched in Fig. 4) are executed, whereby movement to the machining start hole, and wire connecting and cutting operation only are performed without performing correction of the program for the wire cut electric discharge machine so as to detect an abnormal condition relating to machining start holes.

Now, using a program block diagram of Fig. 5, the configuration of program blocks other than machining program blocks will be explained. As shown in (b) of Fig. 5, included in the program blocks other than machining program blocks in the program [(a) of Fig. 5] are a machining hole movement command for causing movement to the machining start hole, and wire connecting and cutting operation to be performed, a wire connection command, a wire cut command and a program end command for causing the program to be ended.

The machining hole movement command is a command for causing a workpiece to be moved with respect to a wire so as to align a predetermined machining hole position with a wire position; the wire connection command is a command for driving the automatic wire connection mechanism such as the upper guide assembly 13, the lower guide assembly 14 and the AWF assembly 17 so as to cause the wire connection to be performed; and the wire cut command is a command for driving the automatic wire connection mechanism in a similar manner so as to cause the wire cut and removal to be performed.

Then, a series of commands of these machining hole movement command, wire connection command and wire cut command are sequentially executed, and during period when these commands are executed, abnormal condition detecting signals from abnormal condition detecting means provided on respective sections of the automatic wire connection mechanism are monitored through the abnormal condition detecting circuit 70, whereby an abnormal condition relating to machining start holes can be detected without performing actual machining. In this manner, the detection of an abnormal condition relating to machining start holes is performed on all machining holes according to the machining order of the program, whereby an abnormal condition such as hole clogging and program failure can be detected for all machining holes which are to be applied to a workpiece.

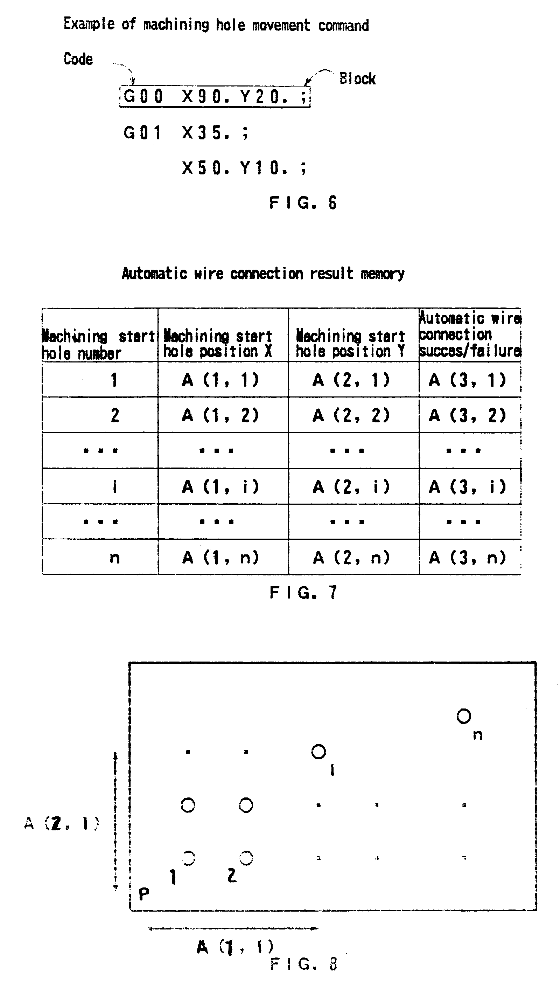

A series of commands of the machining hole movement command, the wire connection command and the wire cut command can be expressed in codes peculiar to respective commands, for example, GXX ..., MXX ... and the like in the program. The XX following the code G or M represents a command positioned in the lower order of the code and can be specified with numeral and the like. Fig. 6 is an example of the code for the machining hole movement command, that is, an example of the command for causing the predetermined machining hole position on the workpiece to be moved to the wire position by the G00 code, in which the numerical values such as X90 and Y20 following the code designate the coordinate at the destination of movement, and the code ";" designates the end of one command.

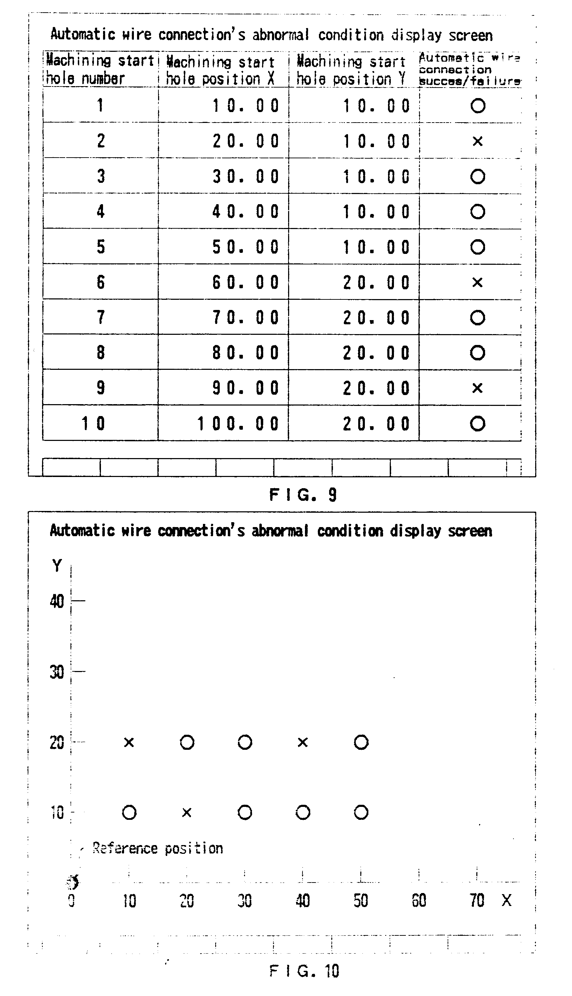

Fig. 7 is a diagram showing the schematic configuration of a memory for storing the results of detected abnormal condition of automatic wire connection in the method of detecting an abnormal condition of automatic wire connection in a wire cut electric discharge machine according to the present invention, the results being stored in a memory such as the RAM 32 in the block diagram of the wire cut electric discharge machine shown in Fig. 3. In the memory shown in Fig. 7, the data on machining start hole positions in the workpiece and on the success/failure of automatic wire connection are stored in A (a, b). Assuming that the machining start hole position in the workpiece is, for example, the machining start hole position in the workpiece as shown in Fig. 8, with respect to a machining start hole number i, a machining start hole position X is expressed in A (1, i) and a machining start hole position Y in A (2, i), and the success/failure of automatic wire connection at the machining start hole in A (3, i). The coordinate values of the machining start hole position X and the machining start hole position Y in Fig. 8 are expressed as values calculated from a reference point P on the workpiece.

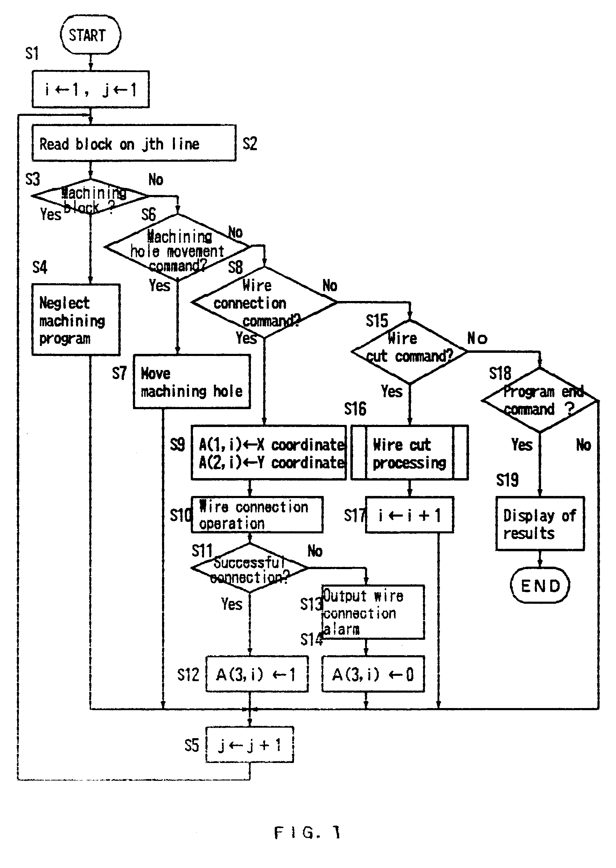

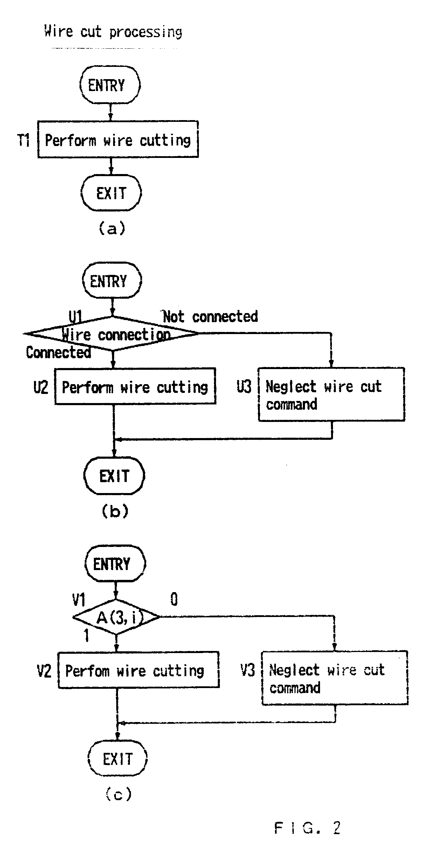

Using a flowchart to help explain the operation of one embodiment of the present invention in Fig. 1 and a subflowchart of the present invention in Fig. 2, the operation of the present invention by the wire cut electric discharge machine having the above-mentioned configuration will be explained hereinafter.

With the above-mentioned configuration, when machining is started, the CPU 30 for the PMC drives an electric discharge machining power source under a set electric discharge machining condition and at the same time, outputs a set wire travel speed command to a feed motor drive unit and a set wire tension command to a powder clutch drive unit to cause the wire 2 to be travelled at the set speed and tension, and at the same time, the CPU 40 for the CNC drives servomotors on X, Y, Z, U and V axes through an axes control circuit according to the machining program stored in the RAM 42 to perform electric discharge machining while allowing the workpiece to be moved relatively to the wire 2. During the electric discharge machining, the CPU 30 monitors the degree of consumption of consumable parts in the wire feed mechanism to display the monitored results on the CRT display unit 50.

Using the flowcharts of Figs. 1 and 2, the processing for performing the detection of an abnormal condition of automatic wire connection in a wire cut electric discharge machine for each cycle will be explained hereinafter. Also, the flowchart of Figs. will be explained using codes, step S, step T, step U and step V.

Step S1: First, "1" is set to i and j to perform the detection of an abnormal condition of automatic wire connection, where i designates the number of the automatic wire connection result memory shown in Fig. 7 and of the machining start hole in the workpiece shown in Fig. 8. and j designates the value used to read sequentially program blocks.

Step S2: In a program shown in Fig. 5, the blocks configuring the program are read sequentially from the beginning. For the purpose of this reading, the block on the jth line corresponding to the j value set at the above-mentioned step S1 or S5 is read. For the j value set at step S1, the value is "1", so that the first line of the program is read, while where the j value is increased by "1" at step S5, the next line of the program is read.

Now, the block on the jth line begins with a code peculiar to respective command as shown in Fig. 6 and ends with ";", and not always corresponds to the number of lines of the program, and corresponds to the block.

Step S3: Then, whether the read block is a machining program block or a program block other than the machining program block is judged. In order to perform the detection of an abnormal condition of automatic wire connection, it is necessary to execute only the program blocks relating to the automatic wire connecting function such as movement to the machining start hole, and wire connecting and cutting operation. Thus, in this process, whether the read block is a machining program block or a program block other than the machining program block is judged, and where the read block is a machining program block, the process proceeds to step S4, while where the read block is a program block other than the machining program block, the process proceeds to step S6 or subsequent step. This judgment can be performed by discriminating the kind of a code at the leading of the block in the program. As previously shown in Fig. 6, positioned at the leading of the block is a code, which designates the kind of command, so that discriminating the kind of the code allows the judgement on whether the read block is a machining program block or a program block other than the machining program block to be performed. In the following judgement processes steps S6, S8, S15 and S16, the kind of the code is discriminated to perform the judgement.

Step S4: Where the read block is a machining program block, the block is not required to detect an abnormal condition of automatic wire connection, so that it is neglected not to execute.

Step S5: "1" is added to j and the process returns to step S2, at which reading and judgement on the next block of the program are performed.

Step S6: At the above-mentioned step S3, where the read block is a program block other than the machining program block, as shown in Fig. 5, the judgement of command contents on whether the block is a machining hole movement command, a wire connection command, a wire cut command or a program end command is performed by the judgement in this process and at step S8, step 15 and step 18.

In step S6, whether the block is a machining hole movement command or not is judged. The judgement can be performed by judging the kind of a code configuring the block as shown in Fig. 6.

Step S7: At the above-mentioned step S6, where the read block is a machining hole movement command, the command of the block is executed to move the workpiece so as to move the machining start hole to the position of the wire 2. The machining start hole moved is the one determined by the value of i set at step S1 or step S17, and thus corresponds to the order of machining start hole set by the program. After the process is ended, the value of j is increased by "1" at step S5, and the process returns to step S2.

Step S8: At the above-mentioned step S6, where the read block is not a machining hole movement command, whether the block is a wire connection command or not is judged. The judgement can be performed by judging the kind of a code configuring the block as shown in Fig. 6.

Step S9: At the above-mentioned step S8, where the read block is a wire connection command, the position coordinate of the machining start hole through which wire connection is performed is stored in the memory. The X axis coordinate of the machining start hole is stored in the A (1, i) within the memory, while the Y axis coordinate thereof is stored in the A (2, i).

Step S10: Then, the command of the block is executed to perform wire connecting operation.

Step S11: The result of the wire connection performed at the above-mentioned step S10 is judged. The judgment on the success/failure of the wire connection can be performed by the output from the abnormal condition detecting circuit in Fig. 3.

Step S12: Where the wire connection is successfully performed, "1", for example, is inputted in the A (3, i) within the memory to store the successful result. The value stored in the A (3, i) can be arbitrarily set. After the process is ended, the value of j is increased by "1" at step S5, and the process returns to step S2.

Step S13: Where the wire connection is unsuccessfully performed, a wire connection alarm is outputted to display the failure of wire connection. The wire connection alarm can employ various alarm means such as the display on the display unit 50 or alarm.

Step S14: Then, "0", for example, is inputted in the A (3, i) within the memory to store the unsuccessful result. The value stored in the A (3, i) can be set to an arbitrary value other than that inputted at the above-mentioned step S12. After the process is ended, the value of j is increased by "1" at step S5, and the process returns to step S2.

Step S15: At the above-mentioned step S8, where the read block is not a wire connection command, whether the block is a wire cut command or not is judged. The judgement can be performed by judging the kind of a code configuring the block as shown in Fig. 6.

Step S16: At the above-mentioned step S15, where the read block is a wire cut command, the command of the block is executed to perform wire cut operation. The processing of the wire cut operation includes various methods such as the flowchart shown in Fig. 2. According to the flowchart of Fig. 2, the methods will be explained hereinafter.

At step T1 of the flowchart shown in the (a) of Fig. 2, the command of wire cut is executed as it is. Where wire connection is performed according to the wire connection command at step S8 to result in successful connection, the wire connected by the processing is cut. On the other hand, where wire connection is performed according to the wire connection command at step S8 to result in unsuccessful connection, although the cut processing of the wire connected by the processing is performed, in practice, the wire has not been connected, so that only the wire cut operation is performed.

The flowchart shown in the (b) of Fig. 2 shows a case where the automatic wire connecting mechanism has a function for neglecting the cut processing when wire connection is not performed. The automatic wire connecting mechanism judges whether wire connection is performed or not at step U1, and where wire connection is performed, executes the wire cut command (at step U2), while where wire connection is not performed, the mechanism neglects the wire cut command (at step U3).

The flowchart shown in the (c) of Fig. 2 shows a method in which the contents of memory is judged to execute or neglect the wire cut command. At step V1, where the value of the A (3, i) of the memory is judged to be "1", the wire connection has been successfully performed, so that the wire cut command is executed (at step V2). At step V1, where the value of the A (3, i) of the memory is judged to be "0", the wire connection has been unsuccessfully performed, so that the wire cut command is neglected (at step V3).

Step S17: After the wire cut processing is ended in the above-mentioned flowchart of Fig. 2, "1" is added to the value of i to perform the processing on the next machining start hole. After the process is ended, the value of j is increased by "1" at step S5, and the process returns to step S2.

Step S18: At the above-mentioned step S15, where the read block is not a wire cut command, whether the block is a program end command or not is judged. The judgement can be performed by judging the kind of a code configuring the block as shown in Fig. 6. Were the block is a program end command, the process proceeds to the next step S19, while where the block is a command other than the program end command, the value of j is increased by "1" at step S5, and the process returns to step S2.

Step S19: At the above-mentioned step S18, where the read block is a program end command, the automatic wire connection result stored in the memory is displayed on the display unit 50.

Using the display examples of Figs. 9 through 12, the display of the automatic wire connection result at step S19 will be explained hereinafter.

Fig. 9 is a first display screen example of the automatic wire connection result in which machining start hole number, the X coordinate and Y coordinate of machining start hole position, and the success/failure of automatic wire connection are displayed as a table. Although the success/failure of automatic wire connection can be displayed with, for example, mark "○" for success, and with mark "X" for failure, it may be arbitrarily expressed in another display code or character.

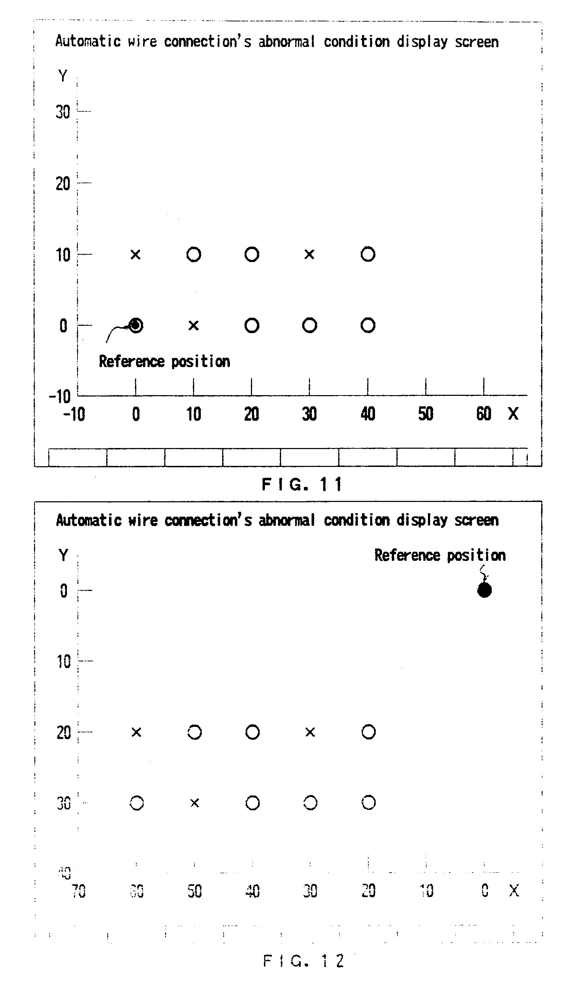

Figs. 10 through 12 are a second, a third and a fourth display screen examples of the automatic wire connection result in which machining start hole number, the X coordinate and Y coordinate of machining start hole position, and the success/failure of automatic wire connection are displayed on a two-dimensional coordinate. The X coordinate and Y coordinate of machining start hole position are expressed as values of coordinate from respective reference points, and although the success/failure of automatic wire connection can be displayed with, for example, mark "○" for success, and with mark "X" for failure, it may be arbitrarily expressed in another display code or character. Now, in Fig. 10, the reference point of coordinate (expressed with mark ● in diagram) is taken as the origin position of coordinate; in Fig. 11, the reference point of coordinate (expressed with mark ● in diagram) is taken as one of machining start holes; and in Fig. 12, the reference point of coordinate (expressed with mark ● in diagram) is taken as an arbitrary position on a two-dimensional coordinate.

The selection of a reference position and the selection of a display diagram for automatic wire connection result by the reference position can be performed by, for example, the input from the CRT/MDI 51 in Fig. 3.

In a screen displaying an abnormal condition of automatic wire connection, the mark for displaying the success/failure of automatic wire connection may be made an arbitrary one other than those shown in the above-mentioned embodiments, for example, a color display and the like.

In displaying the results of an abnormal condition of automatic wire connection, only part of the results may be selected and displayed by selecting and reading the memory storing the results of an abnormal condition of automatic wire connection, or only the machining start hole having an abnormal condition may be displayed.

## Claims

1. A method of performing wire cut electric discharge machining by a program-controlled wire cut electric discharge machine, comprising a preliminary step of detecting an abnormal condition of automatic wire connection in the wire cut electric discharge machine by means of selecting and executing, by operation of the wire cut electric discharge machine, only those control program contents of a workpiece machining control program for the wire cut electric discharge machine, which are program blocks other than machining program blocks and which are related to an automatic wire connecting function, the execution of the selected program contents by the wire cut electric discharge machine being monitored by an abnormal condition detecting means, thereby to provide a preliminary detection of an abnormal condition associated with at least one machining start hole, before wire cut electric discharge machining is actually performed.

2. A method of performing wire cut electric discharge machining according to claim 1, wherein the results obtained by detecting an abnormal condition of at least one machining start hole, together with the position data on the or each machining start hole, are displayed.

3. A method according to claim 1 or 2, wherein the abnormal condition comprises program failure of electric discharge machining.

4. A method according to any one of the preceding claims, wherein the abnormal condition comprises machining failure of the position and/or diameter of a machining start hole.

5. A method according to any one of the preceding claims, wherein the abnormal condition comprises a workpiece mounting failure.

6. A method according to any one of the preceding claims, wherein the abnormal condition comprises inclusion of foreign material into a machining start hole.

7. A method according to any one of the preceding claims, wherein the selected program blocks comprise a machining hole movement command, a wire connection command, and a wire cut command.

## Patentansprüche

1. Verfahren zum Durchführen einer elektrischen Entladungs-Drahtschneidebearbeitung mittels einer programmgesteuerten elektrischen Entladungs-Drahtschneidemaschine, das einen Vorab-Schritt zum Erfassen eines abnormalen Zustands einer automatischen Drahtverbindung der elektrischen Entladungs-Drahtschneidemaschine mittels Auswählens und Ausführens durch Betrieb der elektrischen Entladungs-Drahtschneidemaschine nur solcher Steuerprogramminhalte eines Werkstückbearbeitungs-Steuerprogramms umfaßt, die Programmblöcke sind, Welche keine Bearbeitungsprogrammblöcke sind und sich auf eine automatische Drahtverbindungsfunktion beziehen, wobei die Ausführung der ausgewählten Programminhalte mittels der elektrischen Entladungs-Drahtschneidemaschine durch ein Abnornalzustands-Überwachungsmittel überwacht wird, um dadurch eine Vorab-Erfassung eines abnormalen Zustands, der zumindest einen Bearbeitungsstartloch zugeordnet ist, vorzusehen, bevor die elektrische Entladungs-Drahtschneidebearbeitung tatsächlich durchgeführt wird.

2. Verfahren zum Durchführen einer elektrischen Entladungs-Drahtschneidebearbeitung nach Anspruch 1, bei dem die Ergebnisse, welche durch Erfassen eines abnormalen Zustands zumindest eines Bearbeitungsstartlochs gewonnen sind, zusammen mit den Positionsdaten, die das oder jedes Bearbeitungsstartloch betreffen, angezeigt werden.

3. Verfahren nach Anspruch 1 oder 2, bei dem der abnormale Zustand aus einem Programmfehler der elektrischen Entladungsbearbeitung besteht.

4. Verfahren nach einem der vorhergehenden Ansprüche, bei dem der abnormale Zustand aus einem Bearbeitungsfehler der Position und/oder des Durchmessers des Bearbeitungsstartlochs besteht.

5. Verfahren nach einem der vorhergehenden Ansprüche, bei dem der abnormale Zustand aus einem Werkstückmontagefehler besteht.

6. Verfahren nach einem der vorhergehenden Ansprüche, bei dem der abnormale Zustand aus einer Einlagerung von Fremdmaterial in ein Bearbeitungsstartloch besteht.

7. Verfahren nach einem der vorhergehenden Ansprüche, bei dem die ausgewählten Programmblöcke einen Bearbeitungslochbewegungsbefehl, einen Drahtverbindungsbefehl und einen Drahtschneidebefehl umfassen.

## Revendications

1. Procédé pour réaliser un usinage par étincelage à découpe par fil à l'aide d'une machine d'étincelage à découpe par fil à commande programmée, comprenant une étape préliminaire consistant à détecter un état anormal de la connexion automatique du fil dans la machine d'étincelage à découpe par fil en sélectionnant et en exécutant, par la mise en service de la machine d'étincelage à découpe par fil, uniquement les contenus de programme de commande d'un programme de commande d'usinage d'une pièce à usiner pour la machine d'étincelage à découpe par fil, qui représentent des blocs de programme différant des blocs de programme d'usinage et qui sont apparentés à une fonction de connexion automatique du fil, l'exécution des contenus de programme sélectionnés par la machine d'étincelage à découpe par fil étant surveillée par un moyen de détection d'un état anormal, pour ainsi fournir une détection préliminaire d'un état anormal associé à au moins un trou de départ d'usinage avant de mettre effectivement en oeuvre l'usinage par étincelage à découpe par fil.

2. Procédé de réalisation d'un usinage par étincelage à découpe par fil selon la revendication 1, dans lequel on affiche les résultats obtenus par la détection d'un état anormal d'au moins un trou de départ d'usinage, conjointement avec les données de position concernant le trou de départ d'usinage ou chacun de ces derniers.

3. Procédé selon la revendication 1 ou 2, dans lequel l'état anormal comprend une défaillance du programme de l'usinage par étincelage.

4. Procédé selon l'une quelconque des revendications précédentes, dans lequel l'état anormal comprend une défaillance d'usinage de la position et/ou du diamètre d'un trou de départ d'usinage.

5. Procédé selon l'une quelconque des revendications précédentes, dans lequel l'état anormal comprend une défaillance du montage de la pièce à usiner.

6. Procédé selon l'une quelconque des revendications précédentes, dans lequel l'état anormal comprend l'inclusion d'une matière étrangère dans un trou de départ d'usinage.

7. Procédé selon l'une quelconque des revendications précédentes, dans lequel les blocs de programme sélectionnés comprennent une commande du mouvement du trou d'usinage, une commande de connexion du fil et une commande de découpe par fil.
